(19) Europäisches Patentamt
European Patent Office
Office européen des brevets

(11) **EP 4 239 319 B1**

(12) **EUROPÄISCHE PATENTSCHRIFT**

(45) Veröffentlichungstag und Bekanntmachung des Hinweises auf die Patenterteilung:
**18.12.2024   Patentblatt 2024/51**

(21) Anmeldenummer: **22160135.4**

(22) Anmeldetag: **04.03.2022**

(51) Internationale Patentklassifikation (IPC):
**G01N 21/89** *(2006.01)*    **G01B 11/02** *(2006.01)*
**G01B 11/04** *(2006.01)*    **G01N 21/93** *(2006.01)*

(52) Gemeinsame Patentklassifikation (CPC):
**G01N 21/8903; G01B 11/028; G01B 21/042; G01N 21/93**

(54) **KANTENDETEKTOR FÜR MATERIALBAHNEN**

EDGE DETECTOR FOR SHEETS OF MATERIAL

DÉTECTEUR DE BORD POUR BANDES DE MATIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.09.2023   Patentblatt 2023/36**

(73) Patentinhaber: **BST GmbH**
**33729 Bielefeld (DE)**

(72) Erfinder: **Stach, Ingo**
**33729 Bielefeld (DE)**

(74) Vertreter: **Ter Meer Steinmeister & Partner Patentanwälte mbB**
**Artur-Ladebeck-Strasse 51**
**33617 Bielefeld (DE)**

(56) Entgegenhaltungen:
**US-A- 5 300 787    US-A1- 2007 241 293**

**Beschreibung**

Die Erfindung betrifft einen Kantendetektor für Materialbahnen, mit:

- einem Sender, der dazu eingerichtet ist, Strahlung in einer Richtung senkrecht zur Ebene der Materialbahn auf deren Kante zu emittieren,
- einer Anzahl von Empfängern, die dazu eingerichtet sind, Strahlung von dem Sender zu empfangen, sofern sie nicht durch die Materialbahn abgeschattet sind, und die in einer Zeile angeordnet sind, die sich auf der dem Sender gegenüberliegenden Seite der Materialbahn quer zur Kante erstreckt,
- einer Auswertungseinrichtung zur Berechnung der Position der Kante relativ zum Kantendetektor anhand einer Beziehung zwischen dieser Position und der Gesamtintensität der von den Empfängern empfangenen Strahlung, und
- einer Korrektureinrichtung zur Korrektur der genannten Beziehung im Hinblick auf einen Transparenzfaktor der Materialbahn.

Kantendetektoren dieser Art werden beispielsweise zur Bahnlaufregelung in Druckmaschinen und anderen Maschinen eingesetzt, die eine laufende Materialbahn bearbeiten oder führen. Der Sender kann beispielsweise durch eine Zeile von LEDs gebildet werden, und die Empfänger können als Fotodioden ausgebildet sein. Wenn die Materialbahn nicht mit ihrer Kante in den Zwischenraum zwischen Sender und den Empfängern hineinragt, so ist die von den Empfängern insgesamt empfangene Lichtintensität maximal. Im anderen Extrem, wenn sämtliche Empfängerdioden von der Materialbahn abgeschattet werden, ist die Intensität minimal. Wenn die Position der Kante der Materialbahn der Mitte der Diodenzeile entspricht und die Materialbahn aus vollständig opakem Material besteht, so entspricht die empfangene Intensität dem Mittel aus Maximalwert und Minimalwert. Anhand dieses Zusammenhangs lässt sich durch Messung der Gesamtintensität die Position der Kante der Materialbahn bestimmen.

Wenn die Materialbahn jedoch eine gewisse Transparenz aufweist, so ist der Minimalwert größer als bei einer vollständig opaken Materialbahn und die Beziehung zwischen der empfangenen Intensität und der Position der Kante ändert sich entsprechend einem Transparenzfaktor, der die Lichtdurchlässigkeit der Materialbahn angibt.

Bei bekannten Kantendetektoren wird die Korrektureinrichtung auf der Basis des Transparenzfaktors des jeweils zu bearbeitenden Materials kalibriert, bevor der Kantendetektor in Betrieb genommen wird.

Aufgabe der Erfindung ist es, die Kalibrierung des Kantendetektors bei einem Wechsel der Materialbahn zu vereinfachen.

Diese Aufgabe wird erfindungsgemäß dadurch gelöst, dass die Auswertungseinrichtung einen Kalibriermodus aufweist, in dem die folgenden Schritte ausgeführt werden:

- identifizieren, anhand der von den einzelnen Empfängern empfangenen Strahlungsintensitäten, desjenigen Empfängers, der die Grenze zwischen einer abgeschatteten und einer nicht abgeschatteten Zone der Zeile der Empfänger markiert,
- auswählen einer ersten Gruppe von Empfängern in der abgeschatteten Zone und einer zweiten Gruppe von Empfängern in der nicht abgeschatteten Zone, und
- berechnen des Transparenzfaktors anhand der von den beiden Gruppen empfangenen Strahlungsintensitäten.

Der erfindungsgemäße Kantendetektor kann sich im Kalibriermodus selbst kalibrieren, wodurch für das Bedienungspersonal das umständliche und zeitraubende Kalibrieren der Korrektureinrichtung bei einem Materialwechsel entfällt. Die Kalibrierung kann auch bei laufender Bahn erfolgen, sodass der Verarbeitungsprozess nicht unterbrochen zu werden braucht.

Vorteilhafte Ausgestaltungen und Weiterbildungen der Erfindung sind in den Unteransprüchen angegeben.

Im Kalibriermodus kann die laterale Position der Kante der Materialbahn ebenso gemessen werden wie im Normalbetrieb des Kantensensors, so dass der Kalibriermodus wahlweise auch permanent aktiv sein kann. In einer anderen Ausführungsform wird der Kalibriermodus periodisch in gewissen Zeitabständen während des laufenden Betriebs des Kantendetektors aktiviert.

Da für die Bestimmung des Transparenzfaktors mindestens ein Referenzwert benötigt wird, der die von einem abgeschatteten Empfänger empfangene Intensität angibt, sollte im Kalibriermodus der Messbereich des Sensors so klein sein, dass, wann immer sich die Kante innerhalb des Messbereiches befindet, mindestens ein Empfänger in der abgeschatteten Zone liegt. Wenn der Kantendetektor nicht im Kalibriermodus ist, kann der Messbereich so vergrößert werden, dass die Position der Kante auch dann gemessen werden kann, wenn sie sich ganz am Ende der Zeile der Empfänger befindet.

Im folgenden wird ein Ausführungsbeispiel anhand der Zeichnung näher erläutert.

Es zeigen:

Fig. 1     einen Schnitt durch einen Kantendetektor gemäß der Erfindung;

Fig. 2     ein Diagramm einer Zeile von Empfängern und zugehöriger Empfangsintensitäten;

Fig. 3     Beispiele für Kennlinien des Kantendetektors, die man ohne Transparenzkorrektur für Materialien mit unterschiedlicher Transparenz erhalten würde; und

Fig. 4 die Kennlinien für dieselben Materialien nach Transparenzkorrektur.

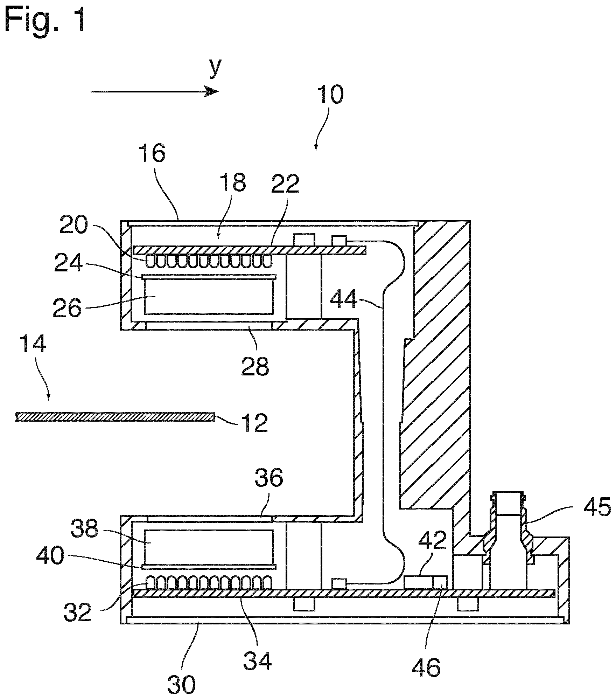

Der in Fig. 1 im Schnitt gezeigte Kantendetektor 10 hat insgesamt die Konfiguration eines C, das die Kante 12 einer Materialbahn 14 übergreift. Bei der Materialbahn 14 kann es sich um eine laufende Bahn handeln, die sich kontinuierlich in der Richtung senkrecht zur Zeichenebene in Fig. 1 bewegt.

Ein Schenkel 16 des Kantendetektors enthält einen Sender 18, der im gezeigten Beispiel durch zwölf LEDs 20 gebildet wird, die in der Form einer Zeile, die sich in einer Richtung y quer zur Kante 12 der Materialbahn 14 erstreckt, auf einer Platine 22 angeordnet sind. Das Licht der LEDs 20 (sichtbares Licht oder Infrarotlicht) fällt durch eine Streuscheibe 24, eine Zylinderlinse 26 und ein Fenster 28 auf einen Randstreifen der Materialbahn 14 und bildet dort einen beleuchteten Streifen, der in der Richtung senkrecht zur Zeichenebene in Fig. 1 relativ gut fokussiert ist und sich in der Richtung y parallel zur Zeile der LEDs 20 über die Kante 12 der Materialbahn hinaus erstreckt.

Ein Schenkel 30 des Kantendetektors liegt dem Schenkel 16 auf der entgegengesetzten Seite der Materialbahn 14 gegenüber und nimmt eine Anzahl von Empfängern 32, beispielsweise in der Form von Fotodioden auf, die in einer sich in der Richtung y erstreckenden Zeile auf einer gemeinsamen Platine 34 angeordnet sind. Das Licht des Senders 18, das die Kante der Materialbahn 12 passiert hat, fällt durch ein Fenster 36, eine Zylinderlinse 38 und eine Streuscheibe 40 auf die Empfänger 32. Durch die Zylinderlinse 38 wird das Licht auf die Zeile der Empfänger 32 fokussiert. Die sende- und empfangsseitigen Streuscheiben 24 und 40 sorgen dafür, dass das Licht in Höhe der Empfänger 32 ein durchgehendes Band von im wesentlichen einheitlicher Helligkeit bildet. Die LEDs 20 und auch die Empfänger 32 haben eine gewisse selbstfokussierende Wirkung in der Richtung y. Insgesamt ist die Optik so ausgelegt, dass jeder Empfänger 32 im wesentlichen das Licht von drei LEDs 20 empfängt, die ihm auf der Senderseite gegenüberliegen. Allerdings wird je nach Position der Materialbahn 14 in der y-Richtung ein mehr oder weniger großer Teil der Empfänger 32 durch die Materialbahn abgeschattet, so dass diese Empfänger, sofern die Materialbahn 14 opak ist, praktisch kein Licht vom Sender 18 empfangen.

Auf der Platine 34 ist ein elektronischer Chip angeordnet, in dem eine Treiberschaltung für die LEDs 20 sowie eine Auswertungseinrichtung 42 zur Auswertung der von den Empfängern 32 empfangenen Signale implementiert ist. Die Treiberschaltung auf der Platine 34 und die LEDs 20 auf der Platine 22 sind durch ein Flachbandkabel 44 miteinander verbunden.

Die von den LEDs 20 gesendeten Lichtsignale sind gepulst, beispielsweise mit einer Impulsdauer in der Größenordnung von einigen Mikrosekunden. In den dazwischenliegenden Impulspausen empfangen die Empfänger 32 lediglich das Fremdlicht aus der Umgebung des Kantendetektors. Indem man die in den Impulspausen empfangene Intensität von der während der Impulse empfangenen Intensität subtrahiert, kann somit der Fremdlichteinfluss eliminiert werden. Wahlweise kann die Dauer der Impulse auch so an die Textur und die Transportgeschwindigkeit der Materialbahn 14 anpassbar sein, dass Intensitätsschwankungen, die durch die Textur der Materialbahn 14 verursacht werden, herausgemittelt werden.

Da in der Praxis die LEDs 20 auf der Senderseite nicht alle exakt die gleiche Helligkeit haben werden und auch die Empfänger 32 nicht alle die gleiche Empfindlichkeit aufweisen werden, werden die von jedem einzelnen Empfänger 32 empfangenen Signale in der Auswertungseinrichtung 42 elektronisch so kalibriert, dass, wenn die Materialbahn 14 nicht vorhanden ist, die kalibrierten Signale sämtlicher Empfänger 32 praktisch identisch sind.

Während des Betriebs des Kantendetektors werden in der Auswertungseinrichtung 42 die kalibrierten Signale aller zwölf Empfänger 32 zu einer Gesamtintensität addiert. Wenn die Materialbahn 14 nicht vorhanden ist (oder vollständig außerhalb des Raums zwischen den Fenstern 28 und 36 liegt), entspricht die Gesamtintensität einem vorab ermittelten Maximalwert, der in der Auswertungseinrichtung 42 gespeichert ist. Wenn die Materialbahn 14 vollständig opak ist und die Kante 12 so weit in y-Richtung verschoben ist, dass sämtliche Empfänger 32 abgeschattet werden, so entspricht die Gesamtintensität einem Minimalwert, der ebenfalls in der Auswertungseinrichtung 42 gespeichert ist. Wenn sich die Kante der opaken Materialbahn in einer Nullposition befindet, die genau der Mitte der Zeilen der LEDs 20 und der Empfänger 32 entspricht, so ist die Gesamtintensität gleich dem arithmetischen Mittel aus dem Maximalwert und dem Minimalwert. Allgemein ist die Höhe der Gesamtintensität, ausgedrückt als Prozentwert des Intervalls zwischen Maximalwert und Minimalwert, proportional zu der y-Position der Kante 12. Die Auswertungseinrichtung 42 gibt ein digitales Signal, das diese y-Position repräsentiert, über Leiterbahnen auf der Platine 34 und über einen Stecker 45 und ein nicht gezeigtes Signalkabel an einen Bahnlaufregler aus, der daraufhin den Lauf der Materialbahn so steuert, dass die y-Position der Kante 12 auf einem vorgegebenen Sollwert gehalten wird, der innerhalb des Messbereichs des Kantendetektors 10 liegt.

Wenn die Materialbahn 14 nicht vollständig opak ist, sondern eine gewisse Transparenz aufweist, so gibt die gemessene Gesamtintensität nicht die wahre Position der Kante 12 an, sondern es ist eine zusätzliche Korrektur erforderlich. Zu diesem Zweck enthält der Chip auf der Platine 34 zusätzlich zu der Auswertungseinrichtung 42 noch eine Korrektureinrichtung 46, die die Summe der von den Empfängern 32 empfangenen Intensitäten mit einem Korrekturfaktor multipliziert, der die Transparenz des Materials ausgleicht.

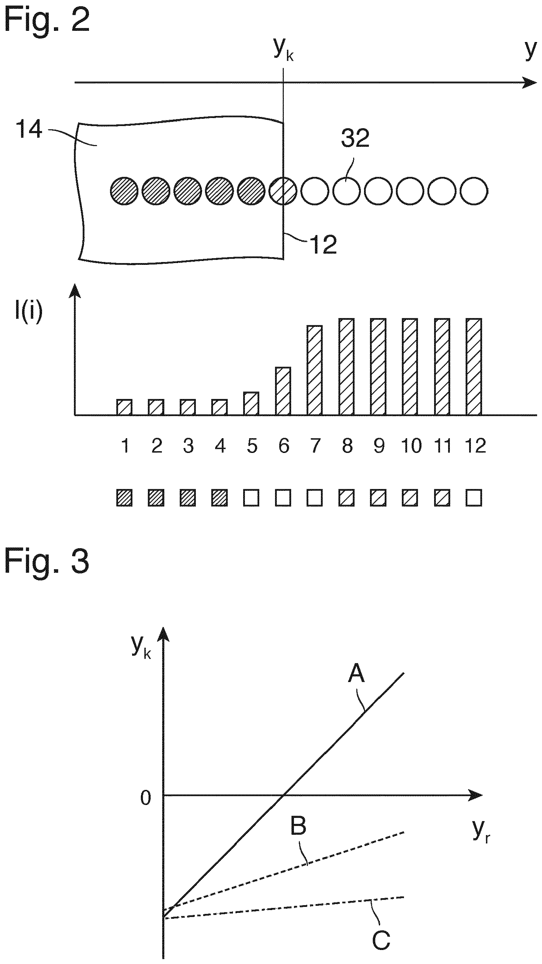

In der Auswertungseinrichtung 42 ist eine Selbstkalibrierfunktion implementiert, die in der Lage ist, die Transparenz der aktuell bearbeiteten Materialbahn 14 zu messen und automatisch den zugehörigen Korrekturfaktor zu berechnen. Der Betriebsmodus, in dem diese Selbstkalibrierfunktion aktiv ist, soll als Kalibriermodus bezeichnet werden. Die Funktionsweise der Auswertungseinrichtung 42 in diesem Kalibriermodus soll im folgenden anhand des in Fig. 2 gezeigten Diagramms erläutert werden.

In Fig. 2 ist schematisch die Zeile der zwölf Empfänger 32 gezeigt, die hier mit dem Index i, i = 1-12, nummeriert sind. Außerdem ist in Fig. 2 ein Teil der Materialbahn 14 einschließlich eines Abschnitts der Kante 12 gezeigt. Im gezeigten Beispiel befindet sich die Kante 12 in einer Position $y_k$, in der der Empfänger mit dem Index i = 6 etwa zur Hälfte durch die Materialbahn abgeschattet wird. Dementsprechend sind die Empfänger mit den Indizes = 1-5 praktisch vollständig abgeschattet, während die Empfänger mit den Indizes i = 7-12 im wesentlichen die volle Intensität empfangen. Die Intensitäten sind in Fig. 2 in der Form eines Balkendiagramms dargestellt. Man erkennt, dass die Empfänger mit den Indizes = 1-4 die gleiche Intensität messen, während der Empfänger bei i = 5 eine etwas höhere Intensität misst, da doch noch etwas Licht des Senders an der Kante 12 vorbei auf diesen Empfänger fällt. Entsprechend messen auch die Empfänger mit den Indizes i = 8-12 die gleiche Intensität, während die Intensität bei i = 7 etwas geringer ist, da ein Teil des Lichts, das eigentlich auf den Empfänger fallen würde, durch die Materialbahn aufgehalten wird.

Der Selbstkalibrierprozess beginnt nun damit, dass der Index desjenigen Empfängers gesucht wird, der der durch die Kante 12 der Materialbahn verursachten Licht/Schatten-Grenze am nächsten liegt. Im gezeigten Beispiel ist dies i = 6. In einer seltenen Konstellation kann es vorkommen, dass die Licht/Schatten-Grenze gerade zwischen zwei benachbarten Empfängern 32 liegt, beispielsweise zwischen den Empfängern mit den Indizes i = 6 und i = 7. In diesem Ausnahmefall wird die Licht/Schatten-Grenze durch zwei Empfänger markiert. In jedem Fall lassen sich aber diejenigen Empfänger identifizieren, die mit Sicherheit in der abgeschatteten Zone liegen. Im gezeigten Beispiel sind dies die Empfänger mit den Indizes i = 1-5. Ebenso lassen sich die Empfänger identifizieren, die in der nicht abgeschatteten Zone liegen. Im gezeigten Beispiel sind dies die Empfänger mit den Indizes i = 7-12.

In einem nächsten Schritt wird eine erste Gruppe von Empfängern, die sicher in der abgeschatteten Zone liegen, und eine zweite Gruppe von Empfängern ausgewählt, die sicher in der nicht abgeschatteten Zone liegen. Die erste Gruppe könnte beispielsweise durch alle fünf Empfänger i = 1 bis i = 5 gebildet werden. Wenn die zweite Gruppe die gleiche Anzahl von Empfängern haben soll wie die erste Gruppe, gibt es für die fünf Empfänger der zweiten Gruppe zwei Möglichkeiten, nämlich i = 7-11 oder i = 8-12. Bevorzugt wäre in diesem Fall die Auswahl, bei der die Empfänger symmetrisch zu der Licht/Schatten-Grenze liegen, also die Gruppe mit i = 7-11. Alternativ könnte man für die erste Gruppe i = 1 bis i = 4 wählen und für die zweite Gruppe i = 9 bis i = 12. Da in diesen Beispielen die zweite Gruppe die gleiche Anzahl von Empfängern enthält wie die erste Gruppe, ist die Gesamtintensität der Empfänger der ersten Gruppe dividiert durch die Gesamtintensität der Empfänger der zweiten Gruppe ein Transparenzfaktor, der die Transparenz der Materialbahn in Prozent angibt. Die beiden Gruppen können auch unterschiedliche Anzahlen von Empfängern haben. In dem Fall sollten die Gesamtintensitäten jeweils mit dem Kehrwert der Anzahl der Empfänger gewichtet werden. Sofern die Kante 12 der Materialbahn und damit die Licht/Schatten-Grenze irgendwo zwischen i = 2 und i = 11 liegt, lässt sich der Transparenzfaktor eindeutig bestimmen. Nur bei sehr starken Abweichungen der Materialbahn, bei denen die Licht/Schatten-Grenze bei i = 1 oder i = 12 liegt, sollte der Kalibrierprozess vorübergehend ausgesetzt werden.

Nachdem auf diese Weise ein Transparenzfaktor t bestimmt worden ist, lässt sich die gemessene y-Position der Kante 12 korrigieren, indem das von der Auswertungseinrichtung 42 gelieferte Ergebnis mit einem Korrekturfaktor k multipliziert wird, der gemäß der Gleichung

$$k = 1/(1\text{-}t)$$

mit dem Transparenzfaktors t zusammenhängt.

In Fig. 3 sind für den Fall, dass die Korrektureinrichtung 46 nicht aktiv ist, drei Kennlinien des Kantendetektors für drei Materialien mit unterschiedlicher Transparenz dargestellt. Auf der waagerechten Achse ist die wahre Position $y_r$ der Kante der Materialbahn angegeben, während auf der senkrechten Achse die gemessene Position $y_k$ angegeben ist, die sich unter der Annahme, dass die Materialbahn opak ist, aus der Gesamtintensität ergibt. Die als durchgehende Linie dargestellte Kennlinie A gilt für eine vollständig opake Materialbahn. Für eine Materialbahn mit mittlerer Transparenz erhält man die flacher verlaufende, gestrichelt eingezeichnete Kennlinie B, und die strichpunktiert eingezeichnete Kennlinie C betrifft den Fall einer Materialbahn mit sehr hoher Transparenz. Wenn sich die Kante der Materialbahn am in Fig. 1 linken Ende der Empfängerzeile befindet und somit kein Empfänger 32 abgeschattet wird, liefern alle drei Kennlinien im wesentlichen das korrekte Ergebnis. Wenn sich die Kante 12 in Fig. 1 weiter nach rechts bewegt, führt jedoch die Transparenz des Materials zu einem flacheren Anstieg der Kennlinien B und C. Die Steigung dieser Kennlinien entspricht dem Transparenzfaktor.

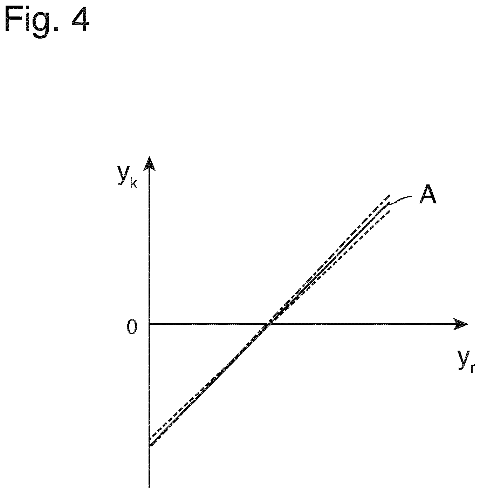

Wenn nun die Korrektureinrichtung 46 aktiv ist und die gemessene Gesamtintensität mit dem Kehrwert des Transparenzfaktors multipliziert wird, der durch den in Fig. 2 illustrierten Prozess bestimmt wurde, so stimmen die Kennlinien im wesentlichen mit der Kennlinie A in Fig. 3 überein, wie in Fig. 4 gezeigt ist, und man erhält unabhängig von der Transparenz des Materials ein korrektes Messergebnis.

## Patentansprüche

1. Kantendetektor (10) für Materialbahnen (12), mit:

   - einem Sender (18), der dazu eingerichtet ist, Strahlung in einer Richtung senkrecht zur Ebene der Materialbahn (14) auf deren Kante (12) zu emittieren,
   - einer Anzahl von Empfängern (32), die dazu eingerichtet sind, Strahlung von dem Sender (18) zu empfangen, sofern sie nicht durch die Materialbahn (14) abgeschattet sind, und die in einer Zeile angeordnet sind, die sich auf der dem Sender (18) gegenüberliegenden Seite der Materialbahn (14) quer zur Kante (12) erstreckt,
   - einer Auswertungseinrichtung (42) zur Berechnung der Position der Kante (12) relativ zum Kantendetektor (10) anhand einer Beziehung zwischen dieser Position und der Gesamtintensität der von den Empfängern (32) empfangenen Strahlung, und
   - einer Korrektureinrichtung (46) zur Korrektur der genannten Beziehung im Hinblick auf einen Transparenzfaktor der Materialbahn (14),

   **dadurch gekennzeichnet, dass** die Auswertungseinrichtung (42) einen Kalibriermodus aufweist, in dem die folgenden Schritte ausgeführt werden:

   - identifizieren, anhand der von den einzelnen Empfängern (32) empfangenen Strahlungsintensitäten, desjenigen Empfängers, der die Grenze zwischen einer abgeschatteten und einer nicht abgeschatteten Zone der Zeile der Empfänger (32) markiert,
   - auswählen einer ersten Gruppe von Empfängern (32) in der abgeschatteten Zone und einer zweiten Gruppe von Empfängern in der nicht abgeschatteten Zone, und
   - berechnen des Transparenzfaktors anhand der von den beiden Gruppen empfangenen Strahlungsintensitäten.

2. Kantendetektor nach Anspruch 1, bei dem der Sender (18) und die Empfänger (32) zum Senden und zum Empfang von sichtbarem Licht oder Infrarotlicht ausgebildet sind.

3. Kantendetektor nach Anspruch 2, bei dem eine zwischen dem Sender (18) und den Empfängern (32) angeordnete Optik (24, 26, 38, 40) so konfiguriert ist, dass das Licht des Senders (18) am Ort der Empfänger (32) ein durchgehendes diffuses Lichtband mit im wesentlichen einheitlicher Intensität erzeugt.

4. Kantendetektor nach Anspruch 2 oder 3, bei dem der Sender (18) mehrere in einer Zeile angeordnete LEDs (20) aufweist und die Optik so konfiguriert ist, dass jeder Empfänger (32) Licht von mehreren benachbarten LEDs empfängt.

5. Kantendetektor nach einem der vorstehenden Ansprüche, bei dem die Auswertungseinrichtung (42) dazu konfiguriert ist, auch im Kalibriermodus die Position der Kante (12) zu messen.

6. Kantendetektor nach einem der vorstehenden Ansprüche, bei dem die Auswertungseinrichtung (42) dazu konfiguriert ist, den Kalibriermodus auszusetzen, wenn die abgeschattete Zone und die nicht abgeschattete Zone nicht jeweils wenigstens einen Empfänger (32) enthalten.

## Claims

1. An edge detector (10) for material webs (12), comprising:

   - a transmitter (18) arranged to emit radiation onto an edge (12) of the material web (14) in a direction perpendicular to the plane of the web,
   - a number of receivers (32) which are set up to receive radiation from the transmitter (18), provided that they are not shadowed by the material web (14), and which are arranged in a line which extends transversely to the edge (12) on the side of the material web (14) opposite the transmitter (18),
   - an evaluation device (42) for calculating the position of the edge (12) relative to the edge detector (10) on the basis of a relationship between this position and the total intensity of the radiation received by the receivers (32), and
   - correction means (46) for correcting said relationship with respect to a transparency factor of the web (14),

   **characterized in that** the evaluation device (42) has a calibration mode in which the following steps are carried out:

   - identifying, on the basis of the radiation intensities received by the individual receivers (32), the receiver which marks the boundary between a shadowed and an unshadowed zone of the line of receivers (32),
   - selecting a first group of receivers (32) in the shadowed zone and a second group of receivers in the unshadowed zone, and
   - calculating the transparency factor on the basis of the radiation intensities received by the two groups.

**2.** The edge detector according to claim 1, in which the transmitter (18) and the receivers (32) are designed for transmitting and receiving visible light or infrared light.

**3.** the edge detector according to claim 2, wherein an optical system (24, 26, 38, 40) arranged between the transmitter (18) and the receivers (32) is configured such that the light from the transmitter (18) generates a continuous diffuse light band of substantially uniform intensity at the location of the receivers (32).

**4.** The edge detector according to claim 2 or 3, wherein the transmitter (18) comprises a plurality of LEDs (20) arranged in a line, and the optics are configured such that each receiver (32) receives light from a plurality of adjacent LEDs.

**5.** The edge detector according to one of the preceding claims, wherein the evaluation device (42) is configured to measure the position of the edges (12) also in the calibration mode.

**6.** The edge detector according to any one of the preceding claims, wherein the evaluation device (42) is configured to suspend the calibration mode if the shadowed zone and the unshadowed zone do not each comprise at least one receiver (32).

**Revendications**

**1.** Détecteur de bord (10) pour des bandes de matière (12), comportant :

- un émetteur (18) conçu pour émettre un rayonnement dans une direction perpendiculaire au plan de la bande de matière (14), au niveau de son bord (12),
- un ensemble de récepteurs (32) conçus pour recevoir le rayonnement de l'émetteur (18) tant qu'ils ne sont pas occultés par la bande de matière (14) et qui sont agencés sur une ligne qui s'étend du côté de la bande de matière (14) opposé à l'émetteur (18), perpendiculairement au bord (12),
- un dispositif d'évaluation (42) pour calculer la position du bord (12) par rapport au détecteur de bord (10) sur la base d'une relation entre cette position et l'intensité totale du rayonnement reçu par les récepteurs (32), et
- un dispositif de correction (46) pour corriger ladite relation compte tenu d'un facteur de transparence de la bande de matière (14),

**caractérisé en ce que** le dispositif d'évaluation (42) comporte un mode d'étalonnage dans lequel les étapes suivantes sont réalisées :

- identifier, sur la base des intensités de rayonnement reçues par les récepteurs (32) individuels, le récepteur qui marque la frontière entre une zone occultée et une zone non occultée de la ligne de récepteurs (32),
- sélectionner un premier groupe de récepteurs (32) dans la zone occultée et un second groupe de récepteurs dans la zone non occultée, et
- calculer le facteur de transparence sur la base des intensités de rayonnement reçues par les deux groupes.

**2.** Détecteur de bord selon la revendication 1, dans lequel l'émetteur (18) et le récepteur (32) sont formés de manière à émettre et à recevoir de la lumière visible ou de la lumière infrarouge.

**3.** Détecteur de bord selon la revendication 2, dans lequel une optique (24, 26, 38, 40) agencée entre l'émetteur (18) et les récepteurs (32) est configurée de telle sorte que la lumière de l'émetteur (18) à l'emplacement du récepteur (32) génère une bande de lumière diffuse continue avec une intensité sensiblement uniforme.

**4.** Détecteur de bord selon la revendication 2 ou 3, dans lequel l'émetteur (18) comporte plusieurs LED (20) agencées sur une ligne et l'optique est configurée de telle sorte que chaque récepteur (32) reçoit de la lumière de plusieurs LED adjacentes.

**5.** Détecteur de bord selon l'une des revendications précédentes, dans lequel le dispositif d'évaluation (42) est configuré pour mesurer également la position du bord (12) dans le mode d'étalonnage.

**6.** Détecteur de bord selon l'une des revendications précédentes, dans lequel le dispositif d'évaluation (42) est configuré pour interrompre le mode d'étalonnage lorsque la zone occultée et la zone non occultée ne contiennent pas respectivement au moins un récepteur (32).

# Fig. 1

# Fig. 2

# Fig. 3

# Fig. 4